# EUROPÄISCHE PATENTANMELDUNG

(11) **EP 3 747 574 A1**
(43) Veröffentlichungstag der Anmeldung: **09.12.2020**
(21) Anmeldenummer: 19178464.4
(22) Anmeldetag: 05.06.2019
(51) Int. Cl.: B22F 9/08, B01D 45/12, B04C 5/24, B60H 1/00, B01D 50/00, B22F 1/00, B22F 9/14, C08J 3/12, C22C 1/04, C22C 21/00

(54) **VERFAHREN UND VORRICHTUNG ZUR HERSTELLUNG VON MATERIALPULVER**

(71) Anmelder: Hightech Metal ProzessentwicklungsgesellschaftmbH, 8712 Niklasdorf (AT)
(72) Erfinder: Dopler, Martin, 8010 Graz (AT); Weiß, Christian, 8793 Trofaiach (AT)
(74) Vertreter: Röggla, Harald

(57) **Zusammenfassung**

Verfahren zur Herstellung von Materialpulver umfassend das Bereitstellen von Material (5) und eines, mittels eines Zerstäubungsgasverdichters (2) mit einem Zerstäubungsgasdruck beaufschlagten Zerstäubungsgases (6) an eine Zerstäubungsvorrichtung (3), das Aufschmelzen des Materials (5) und Zerstäuben des geschmolzenen Materials (5) zu Materialpulver mittels Beaufschlagen des geschmolzenen Materials (5) mit dem Zerstäubungsgas (6) mit der Zerstäubungsvorrichtung (3), das Einbringen des Materialpulvers von der Zerstäubungsvorrichtung (3) in einen Druckbehälter (4) und das Bereitstellen eines, mittels eines Fördergasverdichters (1) mit einem Fördergasdruck beaufschlagten Fördergases (7) an den Druckbehälter (4), wobei der Fördergasdruck über dem Atmosphärendruck und unter dem Zerstäubungsgasdruck liegt, sowie eine Vorrichtung zur Durchführung des Verfahrens.

## Beschreibung

Die Erfindung betrifft ein Verfahren zur Herstellung von Materialpulver gemäß dem Oberbegriff des Anspruchs 1.

Die Erfindung betrifft des Weiteren eine Vorrichtung zur Herstellung von Materialpulver gemäß dem Oberbegriff des Anspruchs 8.

Die Herstellung von Materialpulver aus Schmelze mit Hilfe von Zerstäubungsgasen ist im Stand der Technik bekannt und wird in industriellem Maßstab durchgeführt. Es existieren eine Reihe an verschiedenen Verfahren zur Herstellung von Materialpulver, welche in außenmischende und innenmischende Verfahren klassifiziert werden können. Bei beiden Verfahrensarten wird ein Strom aus geschmolzenen Material mit einem Zerstäubungsgas beaufschlagt, welches das geschmolzene Material in feine Partikel zerstäubt. Diese feinen Partikel erzeugen das Materialpulver. Pulververarbeitungsverfahren, welche in letzter Zeit entwickelt wurden, wie beispielsweise 3D-Druck im Pulverbettverfahren, bedingen jedoch stark gesteigerte qualitative Ansprüche an die Materialpulver in Hinblick auf deren Partikelgröße, Partikelgrößenverteilung, Produktreinheit sowie Partikelform. Insbesondere sind feine Materialpulver oder auch Materialpulver mit enger Partikelgrößenverteilung, sauerstoff- stickstoff-, oder wasserstoffarme Materialpulver, eine geringe Feuchtigkeit an der Pulveroberfläche, keine Verunreinigungen aufgrund von Kontaminierung durch Fremdpulver oder Tiegelmaterial, sowie sphärische, satellitenarme Materialpulver, welche gute Fließeigenschaften aufweisen, von Vorteil. Materialpulver, welche mit im Stand der Technik bekannten Verfahren hergestellt wurden, bieten nicht jene Qualitätsmerkmale, welche neuartige Pulververarbeitungsverfahren voraussetzen. Hierdurch ist es notwendig, dass mittels bekannter Verfahren hergestellte Materialpulver aufwändige Qualitätsanalysen und Aussiebungs- oder Sichtverfahren durchlaufen, damit das Endprodukt die geforderten Produkteigenschaften bereitstellt. Dies führt jedoch dazu, dass ein großer Mengenanteil der hergestellten Materialpulver ausgeschieden wird, die Produktionskosten erhöht werden, der Energieverbrauch pro Menge an hergestelltem hochqualitativen Materialpulver erhöht, und die Ausbeute verringert wird. Diese nachteiligen Eigenschaften herkömmlicher Verfahren zur Herstellung von Materialpulver schlagen sich infolgedessen in einem hohen Preis und in einer geringen Produktverfügbarkeit am Markt für den Endverbraucher nieder.

Ein Verfahren und eine Vorrichtung zur Herstellung von Materialpulver gemäß dem Stand der Technik ist in der US 4,534,917 offenbart. Dieses Verfahren zur Herstellung von Materialpulver umfasst die Bereitstellung von Material an eine Zerstäubungsvorrichtung, welche dieses aufschmilzt. Das aufgeschmolzene Material wird in der Zerstäubungsvorrichtung mit einem Zerstäubungsgas beaufschlagt und von diesem zerstäubt.

Hierbei wird das geschmolzene Material und das Zerstäubungsgas durch eine Düse geleitet, welche Teil der Zerstäubungsvorrichtung ist. Das hierbei erzeugte Materialpulver wird in einen Sammelbehälter eingeblasen.

Es ist die Aufgabe der vorliegenden Erfindung ein Verfahren und eine Vorrichtung zur Herstellung von Materialpulver zu bilden, welche die Nachteile des Standes der Technik überwinden.

Erfindungsgemäß wird die vorliegende Aufgabe durch ein Verfahren mit den Merkmalen von Anspruch 1 und eine Vorrichtung mit den Merkmalen von Anspruch 10 gelöst.

Das erfindungsgemäße Verfahren zur Herstellung von Materialpulver umfasst ein Bereitstellen von Material an eine Zerstäubungsvorrichtung. Des Weiteren wird ein mittels eines Zerstäubungsgasverdichters mit einem Zerstäubungsgasdruck beaufschlagtes Zerstäubungsgas an die Zerstäubungsvorrichtung bereitgestellt. Das Material wird mit der Zerstäubungsvorrichtung aufgeschmolzen, und das geschmolzene Material wird zu Materialpulver zerstäubt indem das geschmolzene Material mit dem Zerstäubungsgas mittels der Zerstäubungsvorrichtung beaufschlagt wird. In weiterer Folge wird das Materialpulver von der Zerstäubungsvorrichtung in einen Druckbehälter eingebracht, in welchem das Materialpulver abgekühlt und gesammelt wird. Das erfindungsgemäße Verfahren umfasst darüber hinaus die Bereitstellung eines mit einem Fördergasdruck beaufschlagten Fördergases an den Druckbehälter, wobei das Fördergas mittels eines Fördergasverdichters mit dem Fördergasdruck beaufschlagt wird. Der Fördergasdruck wird hierbei so gewählt, dass der Fördergasdruck über dem Atmosphärendruck und unter dem Zerstäubungsgasdruck liegt.

Allen Verfahren des Standes der Technik ist gemeinsam, dass über temperaturbeeinflussende Verfahrensschritte hinausgehend keine Maßnahmen zur gezielten Steuerung des thermodynamischen Zustandes des Zerstäubungsgases am Kontaktpunkt mit der Oberfläche des geschmolzenen Materials bei der Zerstäubung gesetzt werden. Der Erfindung liegt daher die Schlüsselüberlegung zugrunde, dass innerhalb der Zerstäubungszone neben einer geeigneten Gasströmungsführung der thermodynamische Zustandspunkt des Zerstäubungsgases an der Oberfläche des geschmolzenen Materials von entscheidender Bedeutung für das Zerstäubungsergebnis ist. Der Gaszustandspunkt ist über die Temperatur und insbesondere den Druck steuerbar und resultiert in einer bestimmten erzielbaren Gasdichte. Aufgrund der höheren Impulsübertragung zwischen Gasströmung und Schmelze in der Zerstäubungszone wird dabei eine höhere Gasdichte bessere Zerstäubungsergebnisse liefern. In diesem Zusammenhang wurde im Zuge der Erfindung die Erkenntnis gewonnen, dass sich die Gasdichte in der Zerstäubungszone am wirksamsten durch den Druck nach der Düse der Zerstäubungsvorrichtung und nicht wie im Stand der Technik bekannt durch den Zerstäubungsdruck des Gases vor der Düse der Zerstäubungsvorrichtung steuern lässt.

Durch die erfindungsgemäße Ausführung des Verfahrens zur Herstellung von Materialpulver wird zusätzlich zum Zerstäubungsgas mit dem Zerstäubungsgasdruck ein Fördergas mit dem Fördergasdruck an den Druckbehälter bereitgestellt. Dieser Fördergasdruck liegt über dem Atmosphärendruck und unter dem Zerstäubungsgasdruck. Hierdurch wird die Möglichkeit geschaffen, die Gasdichte insbesondere am Zerstäubungspunkt zu regulieren, und einen höheren Impulsübertrag zwischen dem geschmolzenen Material und dem das geschmolzene Material umgebende beziehungsweise durchströmende Gas zu erreichen. Hierdurch wird ein im Vergleich zum Stand der Technik feineres Zerstäubungsergebnis erreicht, d.h. die Partikelgröße des mit dem erfindungsgemäßen Verfahren erzeugten Materialpulvers wird verkleinert. Des Weiteren stellt das erfindungsgemäße Verfahren ein Materialpulver mit einer geringeren Verteilungsbreite an Partikelgrößen bereit. Zudem ermöglicht das erfindungsgemäße Verfahren eine Variation der Partikelgröße mittels einer Variation des Fördergasdrucks und des Zerstäubungsgasdrucks unabhängig von der Produktionsmenge. Zudem ist das Verfahren in einer kostengünstig herzustellenden erfindungsgemäßen Vorrichtung umsetzbar. Das Fördergas hat des Weiteren insbesondere die Aufgaben, düsennahe Rezirkulationen der Gasströmungen und somit Pulveragglomerationen zu verhindern, sowie eine Abkühlung des produzierten Materialpulvers zu erreichen, wodurch auf eine gesonderte externe Kühlung verzichtet werden kann. Diese Kühlwirkung kann ebenso über den Druck des Fördergases beeinflusst werden. Je höher der Fördergasdruck gewählt wird, desto besser ist die Kühlwirkung des Fördergases.

Gemäß der bevorzugten Ausführungsform des erfindungsgemäßen Verfahrens wird das Fördergas aus dem Druckbehälter zum Fördergasverdichter rückgeführt, wodurch das Verfahren als Kreisprozess abläuft, und das Fördergas nicht verloren geht. Hierdurch wird der Vorteil erreicht, dass das erfindungsgemäße Verfahren einen geringen Energiebedarf und somit geringe Betriebskosten aufweist. Insbesondere bei der Verwendung von kostspieligen Fördergasen wie CO₂, Stickstoff, Helium oder Argon, oder auch von Gasgemischen wird darüber hinaus der Vorteil erreicht, dass das Fördergas nicht verloren geht und im Kreisprozess wiederverwendet werden kann. Dies führt zu einer weiteren Reduktion der Betriebskosten, einer hohen Produktreinheit und zu verringerten Staubemissionen.

Vorzugsweise wird ein Teil des Fördergases mit dem Fördergasdruck vor dessen Bereitstellung an den Druckbehälter abgezweigt und mittels des Zerstäubungsgasverdichters zu dem Zerstäubungsgas mit dem über dem Fördergasdruck liegenden Zerstäubungsgasdruck verdichtet. Hierdurch wird der Vorteil erreicht, dass das Zerstäubungsgas nicht gesondert bereitgestellt werden muss, sondern aus dem Fördergasstrom erzeugt wird. Dies führt zu einer weiteren Reduktion der Betriebskosten und zur Integration des Zerstäubungsgases in den Kreisprozess.

Das erfindungsgemäße Verfahren umfasst des Weiteren das Fördern des Materialpulvers aus dem Druckbehälter in eine Trennvorrichtung mit dem Fördergas und das anschließende Separieren des Materialpulvers in Materialpulver mit einem ersten Partikelgrößenbereich und Materialpulver mit einem zweiten Partikelgrößenbereich mit der Trennvorrichtung. Im Anschluss wird das Materialpulver mit dem ersten Partikelgrößenbereich aus der Trennvorrichtung entnommen. Hierdurch wird der Vorteil erreicht, dass das Materialpulver mit einem noch engeren Partikelgrößenbereich mit dem erfindungsgemäßen Verfahren erzeugt werden kann.

Vorzugsweise umfasst das erfindungsgemäße Verfahren des Weiteren das Fördern des Materialpulvers mit dem zweiten Partikelgrößenbereich aus der Trennvorrichtung in zumindest eine weitere Trennvorrichtung mit dem Fördergas. In dieser zumindest einen weiteren Trennvorrichtung erfolgt das Separieren des Materialpulvers mit dem zweiten Partikelgrößenbereich in Materialpulver mit zumindest zwei weiteren Partikelgrößenbereichen mit der zumindest einen weiteren Trennvorrichtung. Anschließend wird das Materialpulver mit zumindest einem der zumindest zwei weiteren Partikelgrößenbereiche aus dem Fördergas entnommen. Hierdurch wird der Vorteil erreicht, dass das Materialpulver in weitere Partikelgrößenbereiche separiert werden kann.

Das erfindungsgemäße Verfahren umfasst in der bevorzugten Ausführungsform das Erwärmen des Zerstäubungsgases mit einem Zerstäubungsgaswärmetauscher. Hierdurch wird der Vorteil erreicht, dass mittels des erhitzten Zerstäubungsgases eine verbesserte Zerstäubung erreicht werden kann.

Das erfindungsgemäße Verfahren kann des Weiteren das Abkühlen des Fördergases mit einem ersten Fördergaswärmetauscher umfassen. Durch das Kühlen des Fördergases kann einer Überhitzung der das erfindungsgemäße Verfahren durchführenden erfindungsgemäßen Vorrichtung vorgebeugt werden.

Die erfindungsgemäße Vorrichtung zur Herstellung von Materialpulver umfasst einen Fördergasverdichter, einen Zerstäubungsgasverdichter, eine Zerstäubungsvorrichtung und einen Druckbehälter, und ist dazu ausgebildet das erfindungsgemäße Verfahren durchzuführen. Vorzugsweise umfasst die erfindungsgemäße Vorrichtung des Weiteren zumindest eine Trennvorrichtung. Gemäß der bevorzugten Ausführungsform der erfindungsgemäßen Vorrichtung kann die Vorrichtung des Weiteren eine Kühlvorrichtung, einen Zerstäubungsgaswärmetauscher, einen ersten Fördergaswärmetauscher und/oder einen zweiten Fördergaswärmetauscher aufweisen.

Vorteilhafte Ausgestaltungen des erfindungsgemäßen Verfahrens und der erfindungsgemäßen Vorrichtung werden in weiterer Folge anhand der Figuren näher erläutert.
Figur 1 zeigt ein Prozessschema des erfindungsgemäßen Verfahrens, beziehungsweise eine schematische Darstellung des Aufbaus der erfindungsgemäßen Vorrichtung.
Figur 2a zeigt eine Zerstäubungsvorrichtung der erfindungsgemäßen Vorrichtung in einer ersten Ausführungsvariante.
Figur 2b zeigt die Zerstäubungsvorrichtung der erfindungsgemäßen Vorrichtung in einer zweiten Ausführungsvariante.
Figur 3 zeigt den Einfluss eines Fördergasdrucks auf die Partikelgröße des mit dem erfindungsgemäßen Verfahren hergestellten Materialpulvers.
Figur 4 zeigt eine Verteilung von Partikeldurchmessern von mit dem erfindungsgemäßen Verfahren produzierten Materialpulvern.

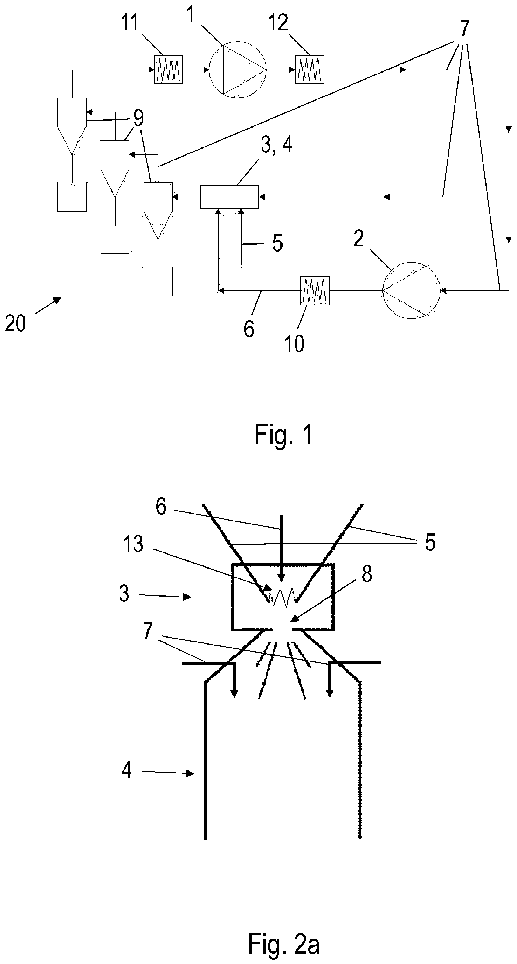

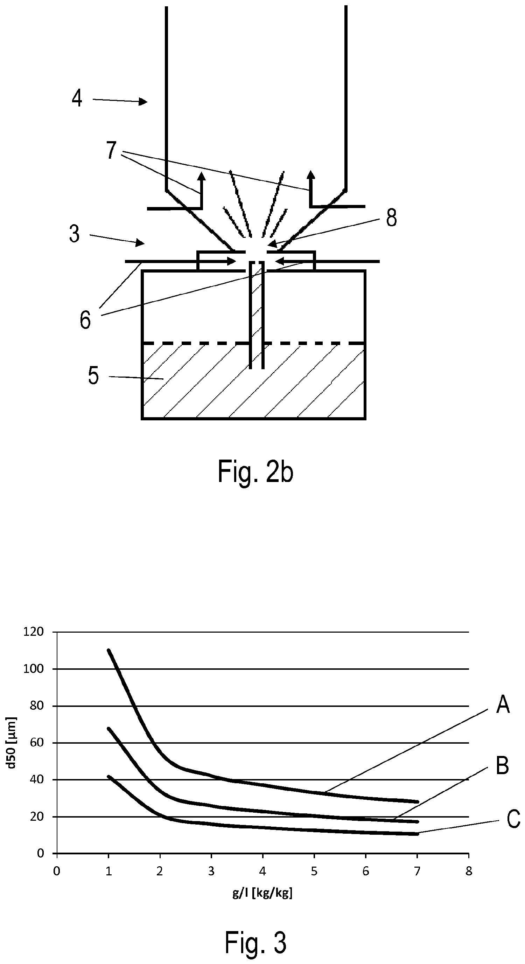

Figur 1 zeigt ein Prozessschema des erfindungsgemäßen Verfahrens beziehungsweise eine schematische Darstellung der erfindungsgemäßen Vorrichtung 20 mit einem Fördergasverdichter 1, einem Zerstäubungsgasverdichter 2, einer Zerstäubungsvorrichtung 3 und einem Druckbehälter 4, wobei der Druckbehälter 4 und die Zerstäubungsvorrichtung 3 in dem Prozessschema als eine gemeinsame Einheit 3 und 4 dargestellt sind. In dem erfindungsgemäßen Verfahren zur Herstellung von Materialpulver wird Material 5 und ein, mittels des Zerstäubungsgasverdichters 2 mit einem Zerstäubungsgasdruck beaufschlagtes, Zerstäubungsgas 6 an die Zerstäubungsvorrichtung 3 bereitgestellt. Unterschiedliche Zerstäubungsvorrichtungen 3, welche im Stand der Technik bekannt sind, können im Rahmen des erfindungsgemäßen Verfahrens eingesetzt werden. Beispielhaft seien hier Open (Free) Jet-, Confined (oder Closed Couple)-, Close Coupled Atomization-, Plasmazerstäubungs-, und im Allgemeinen Innenmischende- und Außenmischende Zerstäubungsvorrichtungen 3 genannt. In der Zerstäubungsvorrichtung 3 wird das Material 5 aufgeschmolzen und zu Materialpulver zerstäubt, indem das geschmolzene Material 5 mit der Zerstäubungsvorrichtung 3 mit dem Zerstäubungsgas 6 beaufschlagt wird. Das Materialpulver ist in der schematischen Ansicht von Figur 1 nicht dargestellt. Anschließend wird das Materialpulver von der Zerstäubungsvorrichtung 3 in den Druckbehälter 4 eingebracht, welcher in Figur 1 in einer Einheit 3 und 4 mit der Zerstäubungsvorrichtung 3 dargestellt ist. Erfindungsgemäß wird ein mittels des Fördergasverdichters 1 mit einem Fördergasdruck beaufschlagtes Fördergas 7 an den Druckbehälter 4 bereitgestellt. Hierdurch wird zusätzlich das Fördergas 7 in einem eigenen Gasstrom in den Druckbehälter 4 eingebracht, wie in Figur 2a und Figur 2b im Detail dargestellt. Dieser Fördergasdruck liegt hierbei über dem Atmosphärendruck und unter dem Zerstäubungsgasdruck. In dem Druckbehälter 4 stellt sich daraufhin ein Gleichgewichtsdruck ein. Hierdurch wird die Möglichkeit geschaffen, die Gasdichte insbesondere am Zerstäubungspunkt zu regulieren, und einen höheren Impulsübertrag zwischen dem geschmolzenen Material 5 und dem das geschmolzene Material 5 umgebenden beziehungsweise durchströmenden Gas zu erreichen, als dies in aus dem Stand der Technik bekannten Verfahren möglich ist. Hierdurch wird ein im Vergleich zum Stand der Technik besseres Zerstäubungsergebnis erreicht, und die Partikelfeinheit des mit dem erfindungsgemäßen Verfahren erzeugten Materialpulvers wird verbessert. Durch den gegenüber dem Atmosphärendruck erhöhten Fördergasdruck wird zusätzlich der Vorteil erreicht, dass keine unterwünschte Umgebungsluft das Materialpulver in dem erfindungsgemäßen Verfahren verunreinigen kann. Hierdurch wird die Reinheit des erzeugten Materialpulvers erhöht, da unerwünschte Reaktionen mit Sauerstoff, Stickstoff oder Wasserdampf vermieden werden. Des Weiteren wird durch den Fördergasdruck eine verbesserte Kühlwirkung bereitgestellt. Durchsatz und Partikelgrößen können ebenfalls mithilfe des Fördergasdrucks gesteuert werden. Durch die Druckbeaufschlagung des Fördergases 7 und damit letztlich auch einer in den Figuren 2a und 2b dargestellten Austrittsöffnung 8 der Zerstäubungsvorrichtung 3 entgegen der Fließrichtung des austretenden Strahls an geschmolzenem Material 5 kann sowohl die Feinheit des Materialpulvers als auch die Produktionsrate gesondert geregelt werden. Je höher der Gasdruck an nach der Austrittsöffnung der Zerstäubungsvorrichtung 3 im Vergleich zum Druck des geschmolzenen Materials 5 ist, umso geringer ist die Produktionsrate. Je höher der Gasdurchsatz im Vergleich zum Durchsatz des geschmolzenen Materials 5 ist, umso feiner ist das erzeugte Materialpulver. Daraus ergibt sich die Möglichkeit einer unabhängigen Regelung von Pulverfeinheit und Produktionsrate. Über den Fördergasdruck kann die Feinheit der erzeugten Partikel des Materialpulvers eingestellt werden. Ein Durchsatz des geschmolzenen Materials kann durch einen Druck, der auf das geschmolzene Material 5 wirkt, geregelt werden. Durch die Zerstäubung des geschmolzenen Materials 5 in den mit dem Fördergas beaufschlagen Druckbehälter 4 ist eine Option zur Regelung der Feinheit des Materialpulvers gegeben.

Das erfindungsgemäße Verfahren eignet sich zur Herstellung von Materialpulver aus unterschiedlichen Materialien 5. Bespielhaft sind hier Metalle wie Eisen, Kupfer und Titan, Metalllegierungen, mineralische Schmelzen und Schlacken, Wachse, Polymere, Kunststoffe und Kunststoffmischungen genannt. Im Fall der Herstellung von Materialpulvern aus Wachsen ist es vorteilhaft in dem erfindungsgemäßen Verfahren Stickstoff oder Argon als Zerstäubungsgas 6 und/oder Fördergas 7 einzusetzen. Im Fall der Herstellung von Materialpulvern aus Polymeren ist es vorteilhaft in dem erfindungsgemäßen Verfahren CO₂ als Zerstäubungsgas 6 und/oder Fördergas 7 einzusetzen. Weitere geeignete Kombinationen unterschiedlicher Materialpulver mit verschiedenen Gasen beziehungsweise Gasgemischen sind dem Fachmann allgemein bekannt.

Wie in Figur 1 dargestellt, wird in diesem Verfahren erfindungsgemäß das Gas vorzugsweise zum Teil oder auch vollständig im Kreis geführt. Gemäß der bevorzugten Ausführungsform des erfindungsgemäßen Verfahrens wird das Fördergas 7 aus dem Druckbehälter 4 zu dem Fördergasverdichter 1 rückgeführt. Hierdurch wird der Vorteil erreicht, dass das Fördergas 7 nicht verloren geht, sondern im erfindungsgemäßen Verfahren wiederverwendet wird. Dies ist insbesondere vorteilhaft bei der Verwendung von teuren Fördergasen 7 wie beispielsweise Edelgasen.

Gemäß der bevorzugten Ausführungsform des erfindungsgemäßen Verfahrens wird ein Teil des Fördergases 7 mit dem Fördergasdruck, wie in Figur 1 dargestellt, vor dessen Bereitstellung an den Druckbehälter 4 abgezweigt. Dieses abgezweigte Fördergas 7 wird zu dem Zerstäubungsgas 6 mittels des Zerstäubungsgasverdichters 2 auf den Zerstäubungsgasdruck verdichtet. Der Zerstäubungsgasdruck liegt über dem Fördergasdruck. Das Zerstäubungsgas 6 wird im Anschluss an die Zerstäubungsvorrichtung 3 bereitgestellt. Hierdurch wird der Vorteil erreicht, dass das selbe Gas als Zerstäubungsgas 6 und als Fördergas 7 verwendet wird. Hierdurch wird das erfindungsgemäße Verfahren vereinfacht und ist kostengünstiger umsetzbar.
Im Anschluss an die Zerstäubung des geschmolzenen Materials 5 mit der Zerstäubungsvorrichtung 3 zu dem Materialpulver und dem Einbringen des Materialpulvers in den Druckbehälter 4 wird das Materialpulver vorzugsweise aus dem Druckbehälter 4 mittels des Fördergases 7 in eine Trennvorrichtung 9 gefördert. Die Trennvorrichtung 9 separiert das Materialpulver in Materialpulver mit einem ersten Partikelgrößenbereich und Materialpulver mit einem zweiten Partikelgrößenbereich. Im Anschluss wird das Materialpulver mit dem ersten Partikelgrößenbereich aus dem Fördergas 7 entnommen. Die Trennvorrichtung 9 kann beispielsweise als Zyklon-Abscheider ausgeführt ein. Alternativ kann die Trennvorrichtung 9 auch als Filter, magnetische, oder elektrostatische Trennvorrichtung 9 ausgeführt sein. Weitere Ausführungsformen von Trennvorrichtungen 9 sind dem Fachmann allgemein bekannt.

In der in Figur 1 dargestellten bevorzugten Ausführungsform des erfindungsgemäßen Verfahrens wird das Materialpulver mit dem zweiten Partikelgrößenbereich aus der Trennvorrichtung 9 in zwei weitere Trennvorrichtungen 9 gefördert. Erfindungsgemäß wird das Materialpulver mit dem zweiten Partikelgrößenbereich aus der Trennvorrichtung 9 in zumindest eine weitere Trennvorrichtung 9 gefördert. In der zumindest einen weiteren Trennvorrichtung 9 wird das Materialpulver mit dem zweiten Partikelgrößenbereich in Materialpulver mit zumindest zwei weiteren Partikelgrößenbereichen getrennt. Im Anschluss wird das Materialpulver mit zumindest einem der zumindest zwei weiteren Partikelgrößenbereiche aus dem Fördergas 7 entnommen. Hierdurch wird der Vorteil erreicht, dass das Materialpulver in unterschiedliche Partikelgrößenbereiche aufgespalten werden kann. Die weiteren Trennvorrichtungen 9 können wie die Trennvorrichtung 9 ausgebildet sein, oder eine alternative Trennmethode anwenden.

Beispielsweise ist die Trennvorrichtung 9 als Zyklonabscheider ausgeführt, wobei eine weitere, nachfolgende Trennvorrichtung 9 bereitgestellt ist, welche als Filter ausgeführt ist. Alternativ können auch zwei Zyklonabscheider in Serie mit einem anschließenden Filter eingesetzt werden. Ein weitere beispielhafte Ausführungsvariante der erfindungsgemäßen Vorrichtung umfasst einen Grobabscheider, einen Zyklonabscheider und einen oder auch zwei nachfolgende Filter. Anstatt Filtern können auch Nassabscheider eingesetzt werden.

Wie in Figur 1 dargestellt umfasst das erfindungsgemäße Verfahren in der bevorzugten Ausführungsform das Erwärmen des Zerstäubungsgases 6 mit einem Zerstäubungsgaswärmetauscher 10. Hierdurch wird der Vorteil erreicht, dass die Temperatur des Zerstäubungsgases 6 erhöht wird, wodurch ein besseres Zerstäubungsergebnis erreicht werden kann.

Vorzugsweise umfasst das erfindungsgemäße Verfahren des Weiteren das Abkühlen des Fördergases 7 mit einem ersten Fördergaswärmetauscher 11. Der erste Fördergaswärmetauscher 11 kühlt das Fördergas 7 vorzugweise vor dessen Verdichtung mit dem Fördergasverdichter 1. Hierdurch wird eine Überhitzung des Fördergases im Fördergasverdichter 1 vermieden.

In der bevorzugen Ausführungsform des erfindungsgemäßen Verfahrens ist des Weiteren ein zweiter Fördergaswärmetauscher 12 bereitgestellt, welcher das Fördergas 7 abkühlt. Hierdurch wird der Vorteil erreicht, dass eine Überhitzung des Fördergases 7 beziehungsweise der einzelnen Komponenten des Verfahrens beziehungsweise einer erfindungsgemäßen Vorrichtung 20, welche das erfindungsgemäße Verfahren abarbeitet verhindert wird.

Die in Figur 1 dargestellte erfindungsgemäße Vorrichtung 20 zur Herstellung von Materialpulver umfasst den Fördergasverdichter 1, den Zerstäubungsgasverdichter 2, die Zerstäubungsvorrichtung 3 und den Druckbehälter 4. Vorzugsweise umfasst die erfindungsgemäße Vorrichtung 20 des Weiteren die zumindest eine Trennvorrichtung 9 zu Trennung des Materialpulvers in unterschiedliche Partikelgrößenbereiche. In der bevorzugten Ausführungsform der erfindungsgemäßen Vorrichtung 20 umfasst die Vorrichtung 20 des Weiteren die Kühlvorrichtung, den Zerstäubungsgaswärmetauscher 10, den ersten Fördergaswärmetauscher 11 und den zweiten Fördergaswärmetauscher 12.

Figur 2a zeigt eine erste Ausführungsvariante der Zerstäubungsvorrichtung 3 der erfindungsgemäßen Vorrichtung 20. Die Zerstäubungsvorrichtung 3 ist in der ersten Ausführungsvariante als Plasmazerstäubungsvorrichtung, vorzugsweise für Metall, ausgeführt. Das Material 5 wird in Form von Metalldrähten in die Zerstäubungsvorrichtung 3 eingebracht, wobei das Aufschmelzen des Materials 5 mittels eines Lichtbogens 13 durch Anlegen einer elektrischen Spannung an die Metalldrähte erfolgt. Es ergibt sich eine Veränderung des Abstandes der Enden der Metalldrähte durch deren kontinuierliches Abschmelzen, welche durch einen stetigen Drahtvorschub kompensiert wird. Der Lichtbogen 13 wird mit dem Zerstäubungsgas 6 mit dem Zerstäubungsgasdruck beaufschlagt, wodurch das geschmolzene Material 5 zu Materialpulver zerstäubt wird. Das Materialpulver wird durch das Zerstäubungsgas 6 in den Druckbehälter 4 eingebracht, wobei der Druckbehälter 4 mit dem Fördergas 7 unter dem Fördergasdruck beaufschlagt ist. Das Fördergas 7 wird vorzugsweise, wie in Figur 2a dargestellt in mehreren Gasstrahlen, beziehungsweise parallel zu dem Ausstoß des Materialpulvers aus der Zerstäubungsvorrichtung 3 in den Druckbehälter 4 eingebracht. Es kann aber auch in einem tangentialen Einlass, oder auch in radialer Richtung zum Ausstoß des Materialpulvers eingebracht werden. Hierdurch werden Verwirbelungen vermieden, wodurch einer Satellitenbildung am Materialpulver vorgebeugt wird. Unter Satellitenbildung ist im Allgemeinen die Anlagerung kleinerer Partikel an größeren Partikeln im Materialpulver zu verstehen. Zudem wird hierdurch auch eine Kühlung des Druckbehälters 4 erreicht, wodurch der Energiebedarf des erfindungsgemäßen Verfahrens beziehungsweise der erfindungsgemäßen Vorrichtung 20 reduziert wird. Durch eine Regulierung des Zerstäubungsgasdrucks und des Fördergasdrucks kann eine Länge des Lichtbogens 13 beeinflusst werden, wodurch ebenfalls eine Variation der Partikelgrößenverteilung und der durchschnittlichen Partikelgröße des erzeugten Materialpulvers erreicht wird.

Figur 2b zeigt eine zweite Ausführungsvariante der Zerstäubungsvorrichtung 3 der erfindungsgemäßen Vorrichtung 20, wobei in dieser Ausführungsvariante das Material 5 thermisch geschmolzen wird. Beispielsweise kann das Material 5 mittels Induktion aufgeschmolzen werden. Weitere Schmelzmethoden sind dem Fachmann allgemein bekannt. Das geschmolzene Material 5 wird in der Zerstäubungsvorrichtung 3 mit dem Zerstäubungsgas 6 beaufschlagt und zu Materialpulver zerstäubt. Das Fördergas 7 wird vorzugsweise, wie bei der ersten Ausführungsvariante der Zerstäubungsvorrichtung 3, in mehreren Gasstrahlen, beziehungsweise parallel, oder ebenso in tangentialer oder radialer Richtung zu dem Ausstoß des Materialpulvers aus der Zerstäubungsvorrichtung 3 in den Druckbehälter 4 eingebracht. Hierdurch wird wiederum einer Satellitenbildung vorgebeugt.

Des Weiteren wird hierdurch eine Kühlung des Druckbehälters 4 erreicht, wodurch der Energiebedarf des erfindungsgemäßen Verfahrens beziehungsweise der erfindungsgemäßen Vorrichtung 20 reduziert wird. Diese Zerstäubungsvorrichtung 3 eignet sich neben Metallen und deren Legierungen auch beispielsweise für elektrisch nicht leitfähige Materialien 5, wie Wachse und Kunststoffe wie beispielsweise Polymere, oder auch für mineralische Schmelzen und Schlacken. Des Weiteren ist es auch möglich, schmelzfähiges dielektrisches Material 5 mithilfe eines Mikrowellengenerators aufzuschmelzen. Weitere Zerstäubungsmethoden sind dem Fachmann allgemein bekannt.

Der Fördergasdruck liegt vorzugsweise mindestens 0,5 bar über dem Atmosphärendruck, und kann bis zu 100 bar über dem Atmosphärendruck liegen. Je höher der Fördergasdruck ist, desto feiner wird das erzeugte Materialpulver und desto besser ist die Kühlwirkung. Bevorzugt liegt der Fördergasdruck zwischen 1 und 10 bar.

Der Zerstäubungsgasdruck liegt in der Regel über dem kritischen Druckverhältnis, um zumindest Schallgeschwindigkeit im engsten Düsenquerschnitt der Zerstäubungsvorrichtung 3 zu erreichen. Durch höhere Relativgeschwindigkeiten zwischen Gas und geschmolzenem Material 5 werden feinere Materialpartikel erzeugt. Auch bei niedrigeren Druckverhältnissen ist eine Zerstäubung und damit eine Produktion von Materialpulver möglich, insbesondere wenn es notwendig ist, gröbere Materialpulver mit enger Partikelgrößenverteilung herzustellen.

Als Zerstäubungsgas 6 und als Fördergas 7 eignen sich dem Fachmann für das zu zerstäubende Material 5 als geeignet bekannte Gase. Es können aber auch Gasgemische verwendet werden. Beispielsweise kann ein geringer Anteil an Sauerstoff in ansonsten inertem Gas (Stickstoff, Argon, Helium o.ä.) dafür sorgen, dass die Oberfläche des Materialpulvers mit einer Oxidschicht bedeckt wird, was eine Passivierung zufolge hat. Es sind auch reduzierende Gasgemische, wie beispielsweise ein Gas welches anteilig eine geringe Menge Wasserstoff enthält, geeignet. Dies bietet die Möglichkeit, Verunreinigungen wie Oxide o.ä. aus dem partikelförmigen Material chemisch zu reduzieren. Besonders vorteilhaft ist der Einsatz von reaktiven Gasgemischen in der erfindungsgemäßen Vorrichtung 20 beziehungsweise in dem erfindungsgemäßen Verfahren. Deren thermodynamische Gleichgewichtszusammensetzung lässt sich durch die eingebrachten Reaktionskomponenten wie etwa Gase mit anteiligen Gehalten an CO, CO₂, H₂O, H₂, NH₃, etc., als Funktion des Drucks und der Temperatur im Strom des Fördergases auf ein in weiten Bereichen steuerbares Sauerstoff-Restpotential hin, einstellen. Solche reaktiven Gasatmosphären mit wahlweise exothermem oder endothermem Charakter sind dem Fachmann beispielsweise aus dem Bereich reaktiver Ofenatmosphären für metallurgische Prozesse bekannt. Damit werden mit dem erfindungsgemäßen Verfahren Oxidations-, Carbonisierungs- und Nitrierungprozesse oder alternativ oxidfreie Pulverproduktionsverfahren für sehr oxidationsempfindliche Produkte, wie beispielsweise stark chromhaltige Edelstähle, deren kontaminationsfreie Produktion in herkömmlichen Inertgasatmosphären alleinig auf Basis Stickstoff oder Argon nicht möglich wäre, zugänglich. Schließlich ist auch abweichend von der Ausführungsform des erfindungsgemäßen Verfahrens als Kreisprozess das erfindungsgemäße Verfahren als offenes Verfahren realisierbar, in welchem als Zerstäubungsgas 6 und Fördergas 7 unterschiedliche Gase oder Gasgemische verwendet werden. Hierdurch kann beispielsweise eine Passivierung des Materialpulvers erst durch das Fördergas 7 erzielt werden.

Figur 3 zeigt den Einfluss des Fördergasdrucks auf die Partikelgröße des Materialpulvers am Beispiel einer Produktion von Aluminiumpulver mittels einer Tiegelverdüsung durch das erfindungsgemäße Verfahren. Figur 3 stellt das Verhältnis des mittleren Partikeldurchmessers bei gegebener Masse d50 (Mass-median-diameter MMD) dem Masseverhältnis von Zerstäubungsgas 7 zu Materialschmelze (M'gas/M'liq) gegenüber. Kurve A des Diagramms in Figur 3 repräsentiert den genannten Zusammenhang bei einem Fördergasdruck von einem bar, Kurve B bei vier bar und Kurve C bei zehn bar. Es ist ersichtlich, dass eine Erhöhung des Fördergasdrucks überraschenderweise zu einer Verkleinerung des mittleren Partikeldurchmessers des produzierten Materialpulvers führt.

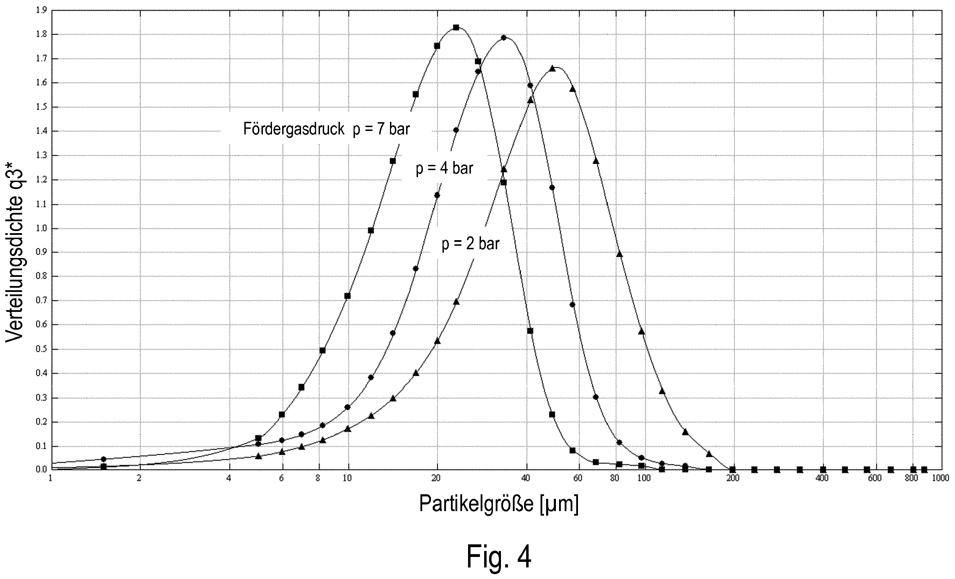

Der Anmelder hat des Weiteren, unter Anwendung der in Figur 2b dargestellten Zerstäubungsvorrichtung 3 nach dem Plasmazerstäubungsverfahren, mit dem erfindungsgemäßen Verfahren Experimente zur Bestimmung des mittleren Partikeldurchmessers d50 und der Verteilungsbreite der Partikeldurchmesser in Abhängigkeit vom Fördergasdruck durchgeführt. Die Resultate dieser Experimente sind in Tabelle 1 und Figur 4 beispielhaft zusammengefasst. Die in Tabelle 1 gezeigten Ergebnisse wurden unter der Verwendung von Kupfer als Material 5 erzielt:

**Tabelle 1**

| Fördergasdruck p [bar] | mittlerer Partikeldurchmessers d50 [µm] | Verteilungsbreite (d90-d10)/d50 |
|---|---|---|
| 7 | 19,84 | 1,33 |
| 4 | 28,61 | 1,43 |
| 2 | 43,82 | 1,58 |

Vergleichbare Ergebnisse wurden mit dem erfindungsgemäßen Verfahren unter der Verwendung von verschiedenen Stählen, Molybdän, und verschiedenen Metalllegierungen erzielt.

Im Folgenden sind zwei weitere Ausführungsbeispiele des erfindungsgemäßen Verfahrens angegeben.

### Ausführungsbeispiel 1:

In diesem Ausführungsbeispiel des erfindungsgemäßen Verfahrens werden 50 kg/h Aluminium bei 750 °C aufgeschmolzen. Als Zerstäubungsgas 6 wird Argon gewählt, welches mit einer Rate von 150 kg/h bei einer Temperatur von 500 °C eingebracht wird. Die jeweiligen Druckverhältnisse sind:
Fördergasdruck: 3 bar
Zerstäubungsgasdruck: 10 bar
Es stellt sich durch die Zuführung des Zerstäubungsgases 6 und des Fördergases 7 ein Anlagendruck im Druckbehälter 4 von 4 bar ein.
Hierdurch werden Aluminiumpartikel mit einem mittleren Durchmesser d50,3 von unter 10 µm produziert, mit einer Verteilungsbreite d84/d50 < 1,6.

### Ausführungsbeispiel 2:

Geschmolzener Edelstahl wird mit einer Rate von 20 kg/h in einem durch eine Schweißstromquelle erzeugten Lichtbogen 13 produziert. Der Strom an Zerstäubungsgas 6 wird mit einem Massedurchsatz von 150 kg/h in die Zerstäubungsvorrichtung 3 eingebracht und zerstäubt den geschmolzenen Edelstahl. Der Lichtbogen 13 kann durch den Fördergasdruck im Druckbehälter 4 beziehungsweise den auf ihn wirkenden Gegendruck verkleinert werden. Hierdurch entstehen sehr homogene Zerstäubungsverhältnisse. Die zerstäubten Edelstahlpartikel haben einen mittleren Durchmesser d50,3 von 22 µm und eine Verteilungsbreite d84/d50 = 1,38.

## Patentansprüche

1. Verfahren zur Herstellung von Materialpulver umfassend die Schritte:
- Bereitstellen von Material (5) und eines, mittels eines Zerstäubungsgasverdichters (2) mit einem Zerstäubungsgasdruck beaufschlagten Zerstäubungsgases (6) an eine Zerstäubungsvorrichtung (3);
- Aufschmelzen des Materials (5) und Zerstäuben des geschmolzenen Materials (5) zu Materialpulver mittels Beaufschlagen des geschmolzenen Materials (5) mit dem Zerstäubungsgas (6) mit der Zerstäubungsvorrichtung (3);
- Einbringen des Materialpulvers von der Zerstäubungsvorrichtung (3) in einen Druckbehälter (4);
**gekennzeichnet durch**
- Bereitstellen eines, mittels eines Fördergasverdichters (1) mit einem Fördergasdruck beaufschlagten Fördergases (7) an den Druckbehälter (4), wobei der Fördergasdruck über dem Atmosphärendruck und unter dem Zerstäubungsgasdruck liegt.

2. Verfahren zur Herstellung von Materialpulver gemäß Anspruch 1, **gekennzeichnet durch** den Schritt:
- Rückführen des Fördergases (7) aus dem Druckbehälter (4) zu dem Fördergasverdichter (1).

3. Verfahren zur Herstellung von Materialpulver gemäß einem der Ansprüche 1 oder 2, **gekennzeichnet durch** den Schritt:
- Abzweigen eines Teils des Fördergases (7) mit dem Fördergasdruck vor dessen Bereitstellung an den Druckbehälter (4) und Verdichten des abgezweigten Teils des Fördergases (7) zu dem Zerstäubungsgas (6) mit dem über dem Fördergasdruck liegenden Zerstäubungsgasdruck mit dem Zerstäubungsgasverdichter (2).

4. Verfahren zur Herstellung von Materialpulver gemäß einem der Ansprüche 1 bis 3, **gekennzeichnet durch** die Schritte:
- Fördern des Materialpulvers aus dem Druckbehälter (4) in eine Trennvorrichtung (9) mit dem Fördergas (7);
- Separieren des Materialpulvers in Materialpulver mit einem ersten Partikelgrößenbereich und Materialpulver mit einem zweiten Partikelgrößenbereich mit der Trennvorrichtung (9);
- Entnehmen des Materialpulvers mit dem ersten Partikelgrößenbereich aus dem Fördergas (7).

5. Verfahren zur Herstellung von Materialpulver gemäß Anspruch 4, **gekennzeichnet durch** die Schritte:
- Fördern des Materialpulvers mit dem zweiten Partikelgrößenbereich aus der Trennvorrichtung (9) in zumindest eine weitere Trennvorrichtung (9) mit dem Fördergas (7);
- Separieren des Materialpulvers mit dem zweiten Partikelgrößenbereich in Materialpulver mit zumindest zwei weiteren Partikelgrößenbereichen mit der zumindest einen weiteren Trennvorrichtung (9);
- Entnehmen des Materialpulvers mit zumindest einem der zumindest zwei weiteren Partikelgrößenbereichen aus dem Fördergas (7).

6. Verfahren zur Herstellung von Materialpulver gemäß einem der Ansprüche 1 bis 5 **gekennzeichnet durch** den Schritt:
- Erwärmen des Zerstäubungsgases (6) mit einem Zerstäubungsgaswärmetauscher (10).

7. Verfahren zur Herstellung von Materialpulver gemäß einem der Ansprüche 1 bis 6, umfassen den Schritt:
- Abkühlen des Fördergases (7) mit einem zweiten Fördergaswärmetauscher (12).

8. Vorrichtung (20) zur Herstellung von Materialpulver mit einem Fördergasverdichter (1), einem Zerstäubungsgasverdichter (2), einer Zerstäubungsvorrichtung (3), und einem Druckbehälter (4), **dadurch gekennzeichnet, dass** die Vorrichtung (20) zur Durchführung eines Verfahrens gemäß einem der Ansprüche 1 bis 3 ausgebildet ist.

9. Vorrichtung (20) gemäß Anspruch 8, **dadurch gekennzeichnet, dass** die Vorrichtung (20) zumindest eine Trennvorrichtung (9) aufweist, und zur Durchführung eines Verfahrens gemäß einem der Ansprüche 1 bis 5 ausgebildet ist.

10. Vorrichtung (20) gemäß Anspruch 9, **dadurch gekennzeichnet, dass** die Vorrichtung (20) eine Kühlvorrichtung, einen Zerstäubungsgaswärmetauscher (10), einen ersten Fördergaswärmetauscher (11) und/oder einen zweiten Fördergaswärmetauscher (12) aufweist, und zur Durchführung eines Verfahrens gemäß einem der Ansprüche 1 bis 7 ausgebildet ist.
